# EUROPEAN PATENT APPLICATION

(11) **EP 2 135 705 A1**
(43) Date of publication of application: **23.12.2009**
(21) Application number: 08158715.6
(22) Date of filing: 20.06.2008
(51) Int. Cl.: B23K 35/36, C01G 9/00

(54) **Fluidizable potassium fluorozincate**

(71) Applicant: Solvay Fluor GmbH, 30173 Hannover (DE)
(72) Inventor: The designation of the inventor has not yet been filed
(74) Representative: Jacques, Philippe

(57) **Abstract**

Fluidizable potassium fluorozincate which is very suitable for dry fluxing applications can be prepared from diluted a potassium base selected from KOH, KHCO₃ and K₂CO₃, ZnO and HF.

## Description

The present invention concerns a fluidizable potassium fluorozincate, a process for its preparation, a method of brazing with it, a process for pneumatically transporting potassium fluorozincate flux and a dry fluxing apparatus comprising potassium fluorozincate.

Potassium fluorozincate (KZnF₃) can be used as brazing agent for brazing parts made of aluminium or aluminium alloys, e.g. alloys comprising aluminum and magnesium. US patent 6,432,221 describes brazing of aluminium and its alloys at a temperature of 390 to 600°C. According to example 1, potassium fluorozincate can be produced by reacting zinc oxide with aqueous hydrofluoric acid (HF) and then with an aqueous solution of potassium fluoride and HF. US patent 6,743,409 describes methods for the preparation of potassium fluorozincate with different particle structure, namely, fine, medium and coarse product. To produce fine product, alkali metal hydroxide and zinc oxide are reacted, and aqueous hydrofluoric acid is added. To produce medium-sized product, hydrogen fluoride and zinc oxide (if desired, applied in the form of the carbonate as source for zinc oxide) are mixed and then, potassium hydroxide is added. To produce coarse product, zinc oxide is mixed with HF and alkali metal fluoride is added. Medium and coarse products are described as suitable for dry fluxing.

Object of the present invention is to provide potassium fluorozincate which is especially suitable for dry fluxing (i.e. for the application in the absence of liquid carriers). Further object of the present invention is to provide a process for obtaining such potassium fluorozincate. These and other objects are provided by the present invention.

The potassium fluorozincate according to the present invention is a particulate material and has a particle size distribution where the X₁₀ value is equal to or greater than 1.5 µm, the X₅₀ value is from equal to or greater than 7.5 µm to equal to or lower than 15 µm, and the X₉₀ value is from equal to or greater than 13.5 µm to equal to or lower than 30 µm The term "X₁₀ equal to or greater than 1.5 µm" denotes that the particle size of the smallest 10 % of the particles present in the potassium fluorozincate is equal to or greater than 1.5 µn, and accordingly, 90 % of the particles have a size greater than 1.5 µm The meaning gets more clear if such an X₁₀ value is compared with an X₁₀ value of a hypothetical material with an X₁₀ value of, say, 0.5 µm It is apparent that this hypothetical material has a higher share of fines than the potassium fluorozincate of the present invention. To the contrary, a material with an X₁₀ value of, say, 10 µm, would have a lower share in fines compared to the potassium fluorozincate of the present invention.

The X₅₀ value of the potassium fluorozincate of the present invention is between equal to or greater than 7.5 µm and equal to or lower than 15 µm This means that the smallest 50 % of the particles, according to the lower limit of 7.5 µm, have a particle size which is equal to or lower than 7.5 µm Consequently, for this lower limit of the X₅₀ value, the other 50 % of the particles have a size of greater than 7.5 µm As to the upper limit, the smallest 50 % of the particles have a particle size of equal to or less than 15 µm. Accordingly, as to the upper limit, 50 % of the particles have a particle size which is greater than 15 µm

For the X₉₀ value, the same principle as for the X₅₀ value applies.

Preferably, the potassium fluorozincate according to the present invention is a particulate material and has a particle size distribution where the X₁₀ value is equal to or greater than 2 µm, the X₅₀ value is from equal to or greater than 7.5 µm to equal to or lower than 13 µm, and the X₉₀ value is from equal to or greater than 13.5 µm to equal to or lower than 22 µm

Percentages are understood to denote mass-%.

The respective X values are determined by laser scattering. They can be measured, for example, in a Sympatec Helos particle size analyzer, e.g. model Helos H2068. The analysis refers to secondary particles.

Thus, the potassium fluorozincate of the present invention is characterized by specific novel limitations concerning its particle size distribution. For example, the "fine product" described in example 1 of US-A 6,743,409 has an X₅₀ value of 3.28 µm and an X₉₀ value of 6.98 µm. Hence, it is apparent that that fine material has a much higher content of smaller particles than the material of the present invention. The "medium fine product" in example 2 of said US-A 6,743,409 has an X₅₀ value of 9.47 µm, and an X₉₀ value of 25.75 µm. The X10 value is not given in that patent. It can be said that the potassium fluorozincate of the present invention has a "sharper" distribution curve than that medium fine product of US-A 6,743,409.

Preferably, 80 % of the particles lie in the range of 4 to 30 µm

Finally, it is easy to see that the "coarse product" described in example 3 of said US patent is far out of the range of potassium fluorozincate of the present invention.

Preferably, in the present invention, the X₁₀ value is equal to or greater than 2.

Preferably, in the present invention, the X₅₀ value is between equal to or greater than 10 µm and equal to or lower than 20 µm

Preferably, in the present invention, the X₉₀ value is between equal to or greater than 15 µm and equal to or lower than 40 µm, preferably lower than 35 µm

The expansion of the material is an indicator for fluidizability. The expansion is calculated as the height of the fluidized bed of particles, relative to the height of the bed of non-fluidized particles. The value for H_{fluid}/H₀ in [mm/mm] is preferably equal to or greater than 1.05. It can be measured, for example, in the following manner : a certain amount of powder (250 g) is placed in a cylindrical plastic vessel (around 15 cm diameter) with a permeable membrane at the bottom. The device is turned on and the vessel is shaken (thus, is subjected to vibrations), and nitrogen is flown through the permeable membrane (90 1/min). After around 30 seconds, the height of the fluidized powder is measured at five different points (H_{fluid}). The measurements are repeated at the same points after shutting off the nitrogen flow and stop the vibrations (H₀). Then a mean value for H_{f} and H₀ is calculated. The ratio H_{f}/H₀ gives the "expansion factor". Additionally, the powder is set again under fluidization conditions (vibration + N2) and an orifice at the lower side of the wall is opened and the amount of powder flowing out of the vessel during 30 seconds is weighed. The latter is repeated five times and a mean value is calculated. The spray factor is calculated as the product of the flown mass by the expansion ratio. The fluidizable product of has spray factor values ranging from 30-85, preferably the value is at least 40.

Pictures with 4000x magnification were taken from the particulate potassium fluorozincate of the present invention, and it was found that a great share, of the primary particles had a very regular cubic structure.

The potassium fluorozincate is especially suitable for dry application techniques ("dry fluxing"). In dry fluxing, the product is applied without any solvent. It can, for example, be applied electrostatically. For this application, the flux must be transported in dry form from a storage container to the apparatus with which it is applied to the surface of the items to be brazed. It was found that the potassium fluorozincate of the present invention is very well fluidizable and sticks very well to the surface of the items to be brazed. If desired, it can be used in admixture with other dry additives, preferably with a similar particle size, like solder metal or solder precursors, for example, silicon or copper.

Thus, it can be advantageously used for dry fluxing brazing processes. Such a process is likewise an embodiment of the present invention.

If desired, it can be applied in wet fluxing processes, for example, as suspension in water or organic liquids, for example, in alcohols, e.g. methanol, ethanol or isopropanol, in ethers, ketones or carboxylic acid esters. Binders, for example, polymers like polyurethane, polyvinyl alcohol, poly(meth)acrylates, or rubber, can be present in that embodiment. Also, thickeners and/or thixotropic agents, for example, gelatine or polyethylene glycol, can be applied in this embodiment.

Another embodiment of the present invention concerns a process for the preparation of the potassium fluorozincate which has a particle size distribution where the X₁₀ value is equal to or greater than 1.5 µm, the X₅₀ value is between equal to or greater than 7.5 µm and equal to or lower than 15 µm, and the X₉₀ value is between equal to or greater than 13.5 µm and equal to or lower than 30 µm, comprises a step wherein zinc oxide is reacted with aqueous hydrogen fluoride so that zinc fluoride is formed, which then is reacted in a second step with aqueous potassium base selected from potassium hydroxide solution, aqueous potassium carbonate preparation or aqueous potassium hydrogen carbonate preparation which contains the base in a concentration between 5 and 20 % by weight, and wherein the second step is performed such that the temperature during reaction is lower than 70°C. An aqueous solution of KOH is preferred, and this embodiment is explained further.

Preferably, the final pH of the reaction mixture (after performance of the second step) is equal to or higher than 2 and equal to or lower than 5.5.

Preferably, the second step is performed such that the temperature during reaction is equal to or lower than 65°C.

The reaction mixture can be cooled to prevent the temperature to rise above the indicated value. It is preferred to apply the potassium hydroxide solution in a temperature equal to or lower than 40°C, preferably at a temperature equal to or lower than 25°C.

The molar ratio of K:Zn:F in the total reaction is preferably (1 ± 0.03) : (1 ± 0.03): (3 - 3.25). More preferably, it is (1 ± 0.01) : (1 ± 0.01) : (3 - 3.2).

According to an embodiment of the present invention, a part of the KOH can be substituted by KF. For example, equal to or more than 1 mol- % of the KOH can be substituted by KF. For example, equal to or less than 95 mol- % of the KOH can be substituted by KF. When an aqueous solution of a mixture of KOH and KF is applied for the second step, less HF is applied in the first step so that the ratio of K:Zn:F given above is observed. The aqueous mixture of KOH and HF can easily prepared by reacting an aqueous solution of KOH with HF (preferably also in the form of an aqueous solution) in the desired amount. Also in this embodiment, the final pH of the reaction mixture (after performance of the second step) is equal to or higher than 2 and equal to or lower than 5.5.

According to an embodiment of the present invention, KF is applied instead of KOH or a mixture of KOH and KF. It is preferred to prepare the KF freshly from one of the potassium bases mentioned above, especially KOH, and HF before it is used in the precipitation reaction.

It was found often to be advantageous to perform the second step (which is a precipitation reaction) slowly. "Slowly" denotes that 10 to 50 mol- % of KOH (or KF or its mixture) are added per hour, if the total amount of this reactant is set to 100 mol- %. The lower the KOH concentration, the faster the speed of addition can be.

If desired, a post-reaction step can be performed. The temperature during the post-reaction step can be equal to or lower than 70°C. For example, the temperature can correspond to the temperature at which the second step was performed. If desired, the respective temperature can be maintained throughout the post-reaction phase. Alternatively, the reaction mixture can be allowed to cool during the post-reaction step, e.g. by not providing heat to the reaction mixture in the post-reaction phase or by removing any heat source if a heat source was applied. The post-reaction phase can, for example, be equal to or longer than 5 minutes. It can be, for example, equal to or shorter than 2 hours.

The precipitated reaction product is removed from the liquid in the reaction mixture in a manner known in the art, e.g. by filtration. The separated product is then dried in a manner known in the art, e.g. by passing hot gas, preferably hot inert gas, for example nitrogen, through and /or over it, and/or by applying a vacuum to evaporate the water and any HF which is present. If desired, the solid formed can be milled after drying.

The potassium fluorozincate according to the present invention has advantageous properties. The most prominent advantage is its fluidizability. Thus, it can be transported mechanically or pneumatically without plugging any lines and constructive parts, for example, in apparatus designed to apply the potassium fluorozincate electrostatically to metal surfaces. Of course, a good fluidizability is also very advantageous if solid product is transported from any container (e.g. a storage tank) to any other a container (e.g., a mixer where it is mixed with liquids and any additives for wet fluxing). Thus, a further embodiment of the present invention is a process for transporting potassium fluorozincate mechanically or pneumatically from one point, e.g. a storage tank, to another point, e.g. another storage tank or a part of an apparatus with which it is applied to parts to be joined. In that transport process, the powder is transported by a compressed gas, especially by compressed air or nitrogen. For example, the powder is transported from a storage tank through a delivery line to the "spraygun" of an apparatus for applying the dry powder to aluminium parts and is electrostatically charged therein. The powder then leaves the spraying head of the spray gun and hits the components to be brazed and adheres to them. The components to be brazed are then optionally assembled and then are brazed, in a brazing furnace, usually under inert gas, e.g. argon or nitrogen, or by torch brazing. Still another embodiment is a dry fluxing apparatus for applying dry flux to aluminium parts to be joined by brazing which contains the potassium fluorozincate according to the present invention. Such dry fluxing apparatus comprise a line for pneumatically delivering dry flux, a spray gun in which the particles are electrostatically charged and expelled in direction of the aluminium parts to be coated with flux.

The following examples shall explain the invention in further detail without intending to limit it.

### Examples :

### Example 1 : Preparation of fluidizable potassium fluorozincate using KF/KOH for precipitation

Reaction :

3 HF + ZnO → ZnF₂ + HF + H₂O

ZnF₂ + HF + KOH → KZnF₃ + H₂O

Molar ratio of K : Zn : F = 1 : 1 : (2.3 + 0.715)
Reagents :
92.0 g aqueous HF (HF concentration 50.0 % by weight)
28.6 g aqueous HF (HF concentration 50.0 % by weight)
120 g fully deionized water
195 g cooling water (deionized)
81.4 g ZnO
125.24 g of aqueous KOH solution (KOH concentration 44.8 % by weight)

### Step 1 : Reaction of zinc oxide and HF

In a first reaction step, 91.8 g of the aqueous HF solution were weighted in a suitable vessel and diluted with 120 g fully desalinated water. Under stirring, 81.4 g of ZnO were added within 10 minutes to the HF solution and under addition of 195 g cooling water. The temperature of the reaction mixture rose to about 78°C. The reaction mixture was then stirred for further 30 minutes. During this time, the temperature of the reaction mixture fell to about 45°C.

28.6 g HF solution were added drop wise to the KOH solution. A strong heat developed.

Then, in a second step, within 13 minutes, the aqueous mixture of KF and KOH was added to the reaction mixture of the first reaction step. The temperature of the reaction mixture rose from 45°C to 80°C. After all of the KF/KOH solution had been added, the resulting reaction mixture was stirred in a post reaction phase for 60 minutes. The hot reaction mixture which had a final pH of about 5 was then filtered and dried under vacuum. The XRD revealed that it consisted of KZnF₃.

The X₁₀ value was determined to be 1.6 µm, the X₅₀ value was determined to be 8.6 µm, and the X₉₀ value was determined to be 14.1 µm.

### Fluidimeter results :

The "Mass of powder flow out" was measured in an apparatus as described above. The determined value was 45.7 g/0.5 min.
The spray factor Rₘ was determined. Rₘ was 48.5 g/0.5 min here.

The expansion of the solid material was determined as above. The ratio H_{fluid}:H₀ was determined to be 1.06 mm/mm.

### Example 2 : Preparation of potassium fluorozincate using diluted KOH,

### final pH 3

Reagents :
120.6 g aqueous HF (concentration HF 50.0 % by weight)
120 g of fully deionized water
81.4 g ZnO
195 g cooling water (deionized)
125.24 g aqueous KOH solution (KOH concentration 44.8 % by weight)
435.8 g water for KOH dilution
Molar ratio of K : Zn : F = 1 : 1 : 3.015

120.6 g of the aqueous HF solution were given into a suitable vessel and diluted with 120 g of fully deionized water. Under stirring, 81.4 g ZnO were added to the HF solution within 10 minutes and reacted under the addition of 195 g cooling water. The temperature rose to 78°C. After the reaction mixture had cooled to 62°C, the cold diluted KOH solution (KOH content after dilution about 10 % by weight) was added within 33. The temperature rose to about 64°C during the addition. The pH of the finally resulting reaction mixture was 3.
After precipitation, the reaction mixture was stirred for 60 minutes in a post reaction phase wherein the temperature rose to 78°C, in part through heating. The reaction mixture was then filtrated and the resulting the solid was dried.

The XRD revealed that the solid consisted of KZnF₃.

### Example 3 : Preparation of potassium fluorozincate using diluted KOH, end pH 3

Example 2 was repeated in a larger scale with a slight variation in the molar ratio of K : Zn : F which was 1.01 : 1 : 3.15.

Reagents :
157.5 mol HF, in the form of 6302 g of a 50 % by weight aqueous solution
50 mol = 4069 g ZnO (purity 99.9 %)
6 1 of fully deionized water for dilution of the HF
9.8 1 of fully deionized water for cooling in the first step
50.5 mol KOH in the form of 6339 g of a 44.7 % by weight aqueous solution

21.8 1 of fully deionized water for dilution of the KOH6 1 of fully deionized water and 6.3 1 of diluted HF were mixed. Zinc oxide was added within about 30 minutes. The temperature rose to about 80°C. 9.8 1 of desalinated water was added for cooling, the temperature was brought to 60°C, and the mixture was subjected to a 30 minute post reaction phase.

Then, 6.3 kg of the KOH, diluted in a separate tank with 21.8 kg of fully desalinated water were added within about 2 ½ hours. After introduction of the KOH solution, the temperature of the reaction mixture was about 51.3°C. In a subsequent post reaction phase, the temperature was 79.2°C (10 minutes after addition of the KOH solution). The final pH was about 3.

The solid was filtrated and dried overnight at 180°C.

The X₁₀ value was determined to be 4.7 µm, the X₅₀ value was determined to be 11.7 µm, and the X₉₀ value was determined to be 18.4 µm

### Fluidimeter results :

The "Mass of powder flow out" was measured to be 40.34 g/0.5 min.

The spray factor Rₘ was determined to be 42.0 g/0.5 min here.

The expansion value H_{fluid}/H₀, measure in mm/mm, was determined to be 1.04.

### Example 4 : Preparation of potassium fluorozincate using diluted KOH, final pH 4.5

Example 2 was repeated, but the final pH of the reaction mixture was 4.5. A product was obtained which had an X₁₀ of 2.2 µm, an X₅₀ of 9.7 µm and an X₉₀ of 16.9 µm

### Fluidimeter results :

The "mass of powder flow out" was determined to be 43.8 g/0.5 min. The spray factor Rₘ was determined to be 46.2 g/0.5 min, and the expansion value was 1.05.

### Example 5 : Brazing of aluminium

Potassium fluorozincate obtained in example 3 is electrostatically applied to an assembly made of a solder coated aluminium angle and a solder-coated aluminium coupon. The assembly is brought into a brazing oven operated under nitrogen gas, heated to about 600°C and brazed thereby.

### Example 6 : Brazing of aluminium

Example 5 is repeated, but with the flux of example 1. Also with this flux, a brazed assembly is obtained.

## Claims

1. A particulate potassium fluorozincate having a particle size distribution where the X₁₀ value is equal to or greater than 1.5 µm, the X₅₀ value is from equal to or greater than 7.5 µm to equal to or lower than 15 µm, preferably equal to or lower than 13 µm, and the X₉₀ value is from equal to or greater than 13.5 µm to equal to or lower than 30 µm, preferably equal to or lower than 22 µm.

2. The potassium fluorozincate of claim 1 wherein the X₁₀ value is equal to or greater than 2.

3. The potassium fluorozincate of any of the preceding claims wherein at least 50 % of the primary particles have cubic appearance.

4. A process for the preparation of potassium fluorozincate which has a particle size distribution where the X₁₀ value is equal to or greater than 1.5 µm, the X₅₀ value is between equal to or greater than 7.5 µm and equal to or lower than 15 µm, equal to or lower than 13 µm, and the X₉₀ value is between equal to or greater than 13.5 µm and equal to or lower than 30 µm, preferably equal to or lower than 22 µm, which process comprises a step wherein zinc oxide is reacted with aqueous hydrogen fluoride so that zinc fluoride is formed, which then is reacted in a subsequent potassium fluorozincate precipitation step with an aqueous composition of a base where the base is selected from potassium hydroxide, potassium carbonate and potassium hydrogen carbonate, preferably potassium hydroxide solution which contains the base, preferably KOH, in a concentration between 5 and 20 % by weight, and wherein the subsequent step is performed such that the temperature during the reaction is lower than 70°C.

5. The process according to claim 4 wherein the aqueous potassium hydroxide solution which is added to the zinc fluoride, has a temperature of equal to or lower than 40°C, preferably equal to or lower than 30°C.

6. The process of claim 5 wherein the molar ratio of KOH, ZnO and HF is (1 ± 0.03) : (1 ± 0.03) : (3 - 3.25).

7. The process of claim 6 wherein a part of the KOH is reacted with HF whereby a mixture of KOH and KF is formed, which is applied in the precipitation step.

8. The process of claim 6 or 7 wherein the potassium hydroxide solution is added slowly with a speed of 10 to 50 mol- % of the base, preferably KOH or the sum of KOH and KF in the mixture of KOH and HF per hour when the total amount of the base introduced is set as 100 mol- %.

9. A process for brazing parts made of aluminium or aluminium alloys where potassium fluorozincate according to any of claims 1 to 7 is applied in dry form to at least one of the parts to be joined.

10. Process for transporting a flux mechanically or pneumatically wherein a potassium fluorozincate according to any of claims 1 to 3 is transported.

11. Brazing apparatus suited for dry fluxing of aluminium parts containing potassium fluorozincate according to any of claims 1 to 3.
